# EUROPEAN PATENT APPLICATION

(11) **EP 2 436 569 A1**
(43) Date of publication of application: **04.04.2012**
(21) Application number: 10780365.2
(22) Date of filing: 08.04.2010
(51) Int. Cl.: B60T 13/60, F01N 3/20, F02D 41/06, F02D 41/08, F02D 43/00, F02D 45/00

(54) **DEVICE AND METHOD FOR CONTROLLING VEHICLE**

(30) Priority: 26.05.2009 JP 2009126004
(71) Applicant: Nissan Motor Co., Ltd., Kanagawa 221-0023 (JP)
(72) Inventor: ISAJI Hiroshi, 1-1, Morinosatoaoyama, Atsugi-shi Kanagawa 243-0123 (JP); SATO Takeshi, 1-1, Morinosatoaoyama, Atsugi-shi Kanagawa 243-0123 (JP); KUBO Susumu, 1-1, Morinosatoaoyama, Atsugi-shi Kanagawa 243-0123 (JP)
(74) Representative: Grünecker, Kinkeldey, Stockmair & Schwanhäusser
(86) International application number: PCT/JP2010/056356
(87) International publication number: WO 2010/137408

(57) **Abstract**

Control apparatus (and a control method) for a vehicle, the vehicle including: an internal combustion engine (EG); a brake booster (21) in which an intake negative pressure of the internal combustion engine is used; and a brake master cylinder (22) connected to an onboard hydraulic pressure actuator (33), the control apparatus comprising: pressure detecting means (27) for detecting a fluid pressure of the brake master cylinder; driving state detecting means (133) for detecting the driving state of the internal combustion engine; and control means (11) for retarding an ignition timing with a throttle valve (114) of the internal combustion engine opened in a case where the driving state detected by the driving state detecting means is in the idle driving state during a cold state of the internal combustion engine and for driving the fluid pressure actuator to assist the brake master cylinder in a case where the fluid pressure detected by the pressure detecting means is equal to or lower than a predetermined value during the idling state of the engine and during the cold state of the engine.

## Description

### TECHNICAL FIELD

The present invention relates to a control apparatus for a vehicle and a control method therefor, the vehicle having a brake booster with an intake negative pressure developed due to a revolution of an internal combustion engine as a boosting source.

### BACKGROUND ART

It is known that since, in an idle-stop vehicle in which a brake booster (brake boosting unit) utilizing a negative pressure of a collector of the internal combustion engine is installed, a brake assistance performance is reduced when a booster negative pressure is reduced due to an idle stop of the vehicle, an internal combustion engine is restarted when the booster negative pressure is equal to or below a predetermined value (Patent document 1). This raises the booster negative pressure to assist a brake depression force.

### Pre-published document

Patent Document 1: Japanese Patent Application First Publication No. 2000-310133.

### DISCLOSURE OF THE INVENTION

### Problem to be solved by the invention

However, in the above-described conventional vehicle, in order to improve an emission performance with a temperature of an exhaust purification catalyst raised at a time of cold of an engine, an ignition timing is retarded with the throttle valve opened. Thus, the booster negative pressure cannot be secured and the brake assistance performance is reduced.

A problem to be solved by the present invention is to provide control apparatus for a vehicle and control method therefor which improve an exhaust performance while maintaining the brake assistance performance.

### Means for solving the problem

The present invention solves the above-described problem by driving a fluid pressure actuator mounted in the vehicle when the booster negative pressure is reduced by retarding the ignition timing with the throttle valve of the internal combustion engine opened to assist the drive of the brake master cylinder.

### Effects of the invention

According to the present invention, a temperature of exhaust gas is raised to retard the ignition timing with the throttle valve of the internal combustion engine opened. This causes the temperature of the exhaust purification catalyst to be raised. Hence, an exhaust purification performance during the cold of the engine can be increased. At this time, the booster negative pressure of the brake booster is reduced due to the opening of the throttle valve. Since the drive of the brake master cylinder is assisted due to the drive of the fluid pressure actuator mounted in the vehicle, the brake assistance performance can also be maintained.

### BRIEF DESCRIPTION OF THE DRAWINGS

Fig. 1 is a block diagram representing an essential part of a vehicle to which a preferred embodiment according to the present invention is applicable.
Fig. 2 is a rough cross sectional view of a brake booster and a brake master cylinder shown in Fig. 1.
Fig. 3 is a flowchart representing an example of a control procedure executed by an engine control unit shown in Fig. 1.
Fig. 4 is a flowchart representing another example of the control procedure executed by the engine control unit shown in Fig. 1.
Fig. 5 is a flowchart representing a further example of the control procedure executed by the engine control unit shown in Fig. 1.
Fig. 6A is a graph representing a relationship of an intake pressure with respect to an ignition timing.
Fig. 6B is a graph representing a relationship of a catalyst inlet exhaust temperature with respect to an ignition timing. Fig. 6C is a graph representing an emission with respect to the ignition timing.

### Description of the Embodiments

### Embodiments

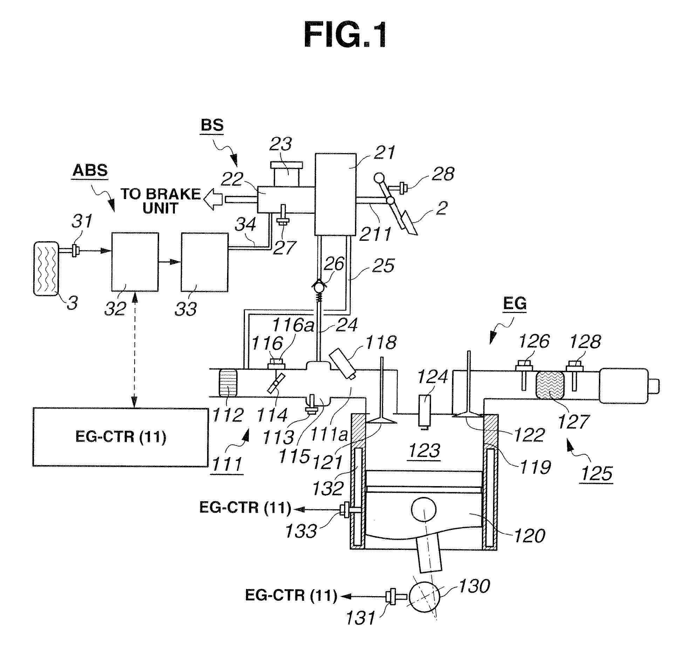

Hereinafter, a preferred embodiment according to the present invention will be described on a basis of drawings. Fig. 1 is a block diagram representing an essential part of a vehicle to which the preferred embodiment according to the present invention is applicable. The essential part mainly includes an engine EG, a brake booster BB, and an anti-lock brake system ABS.

In addition, an intake negative pressure of a collector 115 of engine EG is introduced into a brake booster 21 of a brake system BS to assist a brake depression force. On the other hand, under a control condition that the intake negative pressure of collector 115 cannot be utilized, oil of a hydraulic pressure actuator of anti-lock brake system ABS is introduced into a brake master cylinder 22 of brake system BS to assist the brake depression force. An example of this will be described below.

An intake passage 111 of engine EG is provided with an air filter 112, a throttle valve 114 for controlling intake air flow quantity and a collector 115. A pressure sensor 113 detecting an suction pressure of collector 115 is provided. A detection signal of pressure sensor 113 is outputted to an engine control unit 11 as will be described later.

An actuator 116 such as a DC motor is provided on throttle valve 114 for adjusting an opening angle of throttle valve 114. The opening angle of throttle valve 114 is electronically controlled by this throttle valve actuator 116 on a basis of a drive signal from engine control unit 11 so as to achieve a demanded torque calculated on a basis of an accelerator pedal manipulated variable or so forth by a vehicle driver. In addition, a throttle sensor 117 to detect the opening angle of throttle valve 114 and to output the detected signal to engine control unit 1 is provided. It should be noted that throttle sensor 117 can function as an idle switch.

In addition, a fuel injection valve 118 is provided to be exposed to part of intake passage 111a branched into respective cylinders. Fuel injection valve 118 is driven to open in response to a drive pulse signal set in engine control unit 11 and fuel controlled under a predetermined pressure by means of a pressure regulator and supplied from a fuel pump not shown is injected within intake passage 111a (hereinafter, a fuel injection port).

A space enclosed by a cylinder 119, a crown surface of a piston 120 which performs a reciprocating motion within a cylinder head on which an intake valve 121 and an exhaust valve 122 constitutes a combustion chamber 123. A spark plug 124 is attached to be exposed to combustion chamber 123 of each cylinder to perform an ignition for a sucked mixture air at a predetermined timing on a basis of an ignition signal from engine control unit 11.

On the other hand, an air-fuel ratio sensor 126 is disposed in an exhaust passage 125 to detect a particular component in the exhaust, for example, an oxygen concentration, to detect an air-fuel ratio of an exhaust gas, in its turn, the sucked mixture air. The detected signal is outputted to engine control unit 11. This air-fuel ratio sensor 126 may be an oxygen sensor which outputs two states of rich and lean or may be a wide area air-fuel mixture sensor which detects linearly the air-fuel ratio over a wide range.

In addition, an exhaust purification catalyst 127 to purify exhaust gas is disposed in exhaust passage 125. As this exhaust purification catalyst 127, a three-way catalyst which can oxidize mono-oxide carbon CO or hydrocarbon HC and reduce a nitrogen oxide Nox to purify the exhaust gas in a vicinity to a stoichiometric air-fuel ratio (a theoretical air-fuel mixture ratio, λ=1, air weight/fuel weight = 14. 7) or oxidation catalyst which performs the oxidization of monoxide CO and hydrocarbon HC can be used.

A temperature sensor 128 to estimate a temperature of exhaust gas, in its turn, a temperature of exhaust purification catalyst 127 is disposed at a portion of exhaust passage 125 which is before, after, or in a middle of the catalyst and its detected signal is outputted to engine control unit 11.

A crank angle sensor 131 is disposed on a crankshaft 130 of engine EG. Engine control unit 11 detects an engine speed Ne by counting a crank unit angle signal outputted in synchronization with an engine revolution from crank angle sensor 131 for a constant interval of time or measuring a period of a crank reference angle signal.

A coolant temperature sensor 133 is disposed to be exposed to a cooling jacket 132 of engine EG to detect a coolant temperature Tw within cooling jacket 131 and the detected signal is outputted to engine control unit 11.

A brake pedal 2 disposed on driver's foot of a driving seat is rotatable with a fulcrum as a center and a push rod 211 attached between the fulcrum and a point of application is moved in a forward direction or backward direction at a stroke corresponding to an operation of brake pedal 2. Thus, the depression force through brake pedal 2 is transmitted to brake booster 21 and boosted thereat and transmitted to brake master cylinder 22.

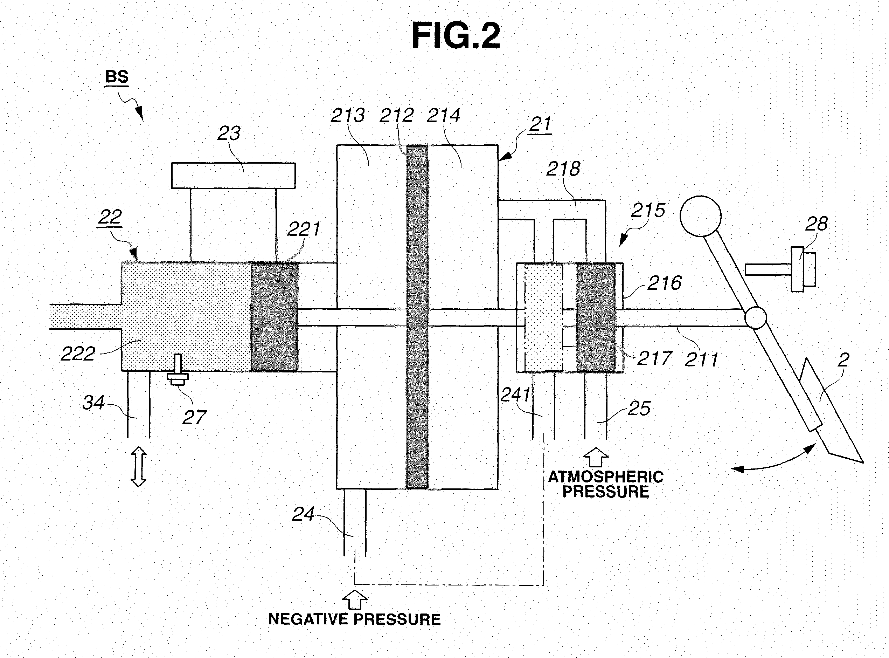

Fig. 2 is a rough cross sectional view representing diagrammatically an example of brake booster 21 and brake master cylinder 22 shown in Fig. 1.

A negative pressure chamber 213 and an atmospheric chamber 214 are formed with a housing of brake booster 21 via a diaphragm 212. Negative pressure chamber 213 is connected to collector 115 of engine EG via a negative pressure piping 24 and atmospheric chamber 214 is connected to a space between air filter 112 and throttle valve 114 via a positive pressure piping 25 and a plunger unit 215 as will be described later. A check valve 26 to prevent a reverse flow from brake booster 21 to collector 115 is disposed in negative pressure piping 24 (refer to Fig. 1).

It should be noted that, although air located at the downstream side of air filter 112 is introduced into atmospheric chamber 214 in order to prevent dust or so forth from being mixed thereinto, its position is not limited if clean air is introduced under the atmospheric pressure.

A center position of diaphragm 212 to partition hermetically negative pressure chamber 213 and atmospheric chamber 214 is deformed in the forward-backward movement direction of pushrod 211 within the housing in accordance with the forward-backward movement of pushrod 211. At this time, a difference pressure between negative pressure chamber 213 and atmospheric chamber 214 is acted on diaphragm 212. Thus, the depression force transmitted to push rod 211 is assisted. Hence, in a case where the difference pressure between negative pressure chamber 213 and atmospheric pressure chamber 214 is zero, only the depression force transmitted to pushrod 211 is acted upon piston 221 of brake master cylinder 22.

Plunger unit 215 is disposed to introduce air into atmospheric chamber 214 when brake pedal 2 is depressed and to make an equal pressure between atmospheric chamber 214 and negative pressure chamber 213 when brake pedal 2 is not depressed.

Plunger unit 215, in this embodiment, includes a housing 216 and, within housing 216, a valve plunger 217 which moves in a forward-backward direction in accordance with the forward-backward movement of pushrod 211. Within housing 216, a negative pressure piping 241 is communicated with negative pressure piping 24 and a positive pressure piping 25 is connected at a predetermined position.
Communication piping 218 serves to communicate between housing 216 and atmospheric chamber 214.

Then, when brake pedal 2 is not depressed as denoted by a solid line in Fig. 2, positive pressure piping 25 and one side of communication piping 218 (rightward side in Fig. 2) is closed by means of valve plunger 216 and, at the same time, the other of communication piping 218 (leftward side in Fig. 2) is opened. Thus, negative pressure air from negative pressure piping 24 is introduced into atmospheric chamber 214 via negative pressure piping 241 and communication piping 28 so that pressures in atmospheric chamber 214 and negative pressure chamber 213 are equal to each other. Consequently, an assistance force from diaphragm 212 to pushrod 211 indicates zero.

On the other hand, when brake pedal 2 is depressed as denoted by a dot-dot-and-dash line in Fig. 2, valve plunger 216 closes negative pressure piping 241 and the other of communication piping 218 (leftward side in Fig. 2) and, at the same time, positive pressure piping 25 and the one of communication piping 218 (rightward side in Fig. 2) is opened. Thus, air from positive pressure piping 25 is introduced into atmospheric chamber 214 via communication piping 218 and negative pressure air of collector 115 is introduced into negative pressure chamber 213 via negative pressure piping 24. Consequently, air pressure directed toward negative pressure chamber 213 from atmospheric chamber 214 is acted upon diaphragm 212 so that the assistance force in the forwarding direction is acted upon push rod 211.

Brake master cylinder 22 is provided with a piston 221 at an inner side thereof. Piston 221 serves to transmit the depression force according to the forward-backward movement of pushrod 211 to a brake unit not shown via oil 222 located at a front surface of cylinder 22.

A hydraulic pressure piping 34 to communicate with a hydraulic pressure actuator 33 of an anti-lock brake system ABS is connected to a hydraulic pressure chamber located at the front surface side of piston 221 of brake master cylinder 22 in this embodiment. Hydraulic pressure actuator 33 performs a pressure increase, holding, and a pressure decrease for the hydraulic pressure of the hydraulic pressure chamber of piston 221 on a basis of the control signal from an ABS control unit 32. A hydraulic pressure sensor 27 for detecting a hydraulic pressure is disposed in a hydraulic pressure chamber (or hydraulic pressure piping 34) located at the front surface side of the piston of brake master cylinder 22 and the detected signal is outputted to engine control unit 11.

Referring back to Fig. 1, anti-lock brake system ABS is a system having a function to prevent a lock of a road wheel 3 in a case where an abrupt brake is applied to the vehicle and during a braking on a road surface easy to slip to improve a stability of the vehicle and includes: a revolution sensor 31 to detect a revolution of road wheel 3; an ABS control unit 32; and hydraulic pressure actuator 33. Anti-lock brake system ABS determines a slip state of the road wheel on a basis of the revolution of each road wheel and a traveling speed of the vehicle, drivingly controls the hydraulic pressure actuator on a basis of this determination, and performs the pressure increase, the holding, and pressure decrease for the brake liquid pressure of master cylinder 22.

It should be noted that this anti-lock brake system ABS may have a function as a slope backward movement suppression unit (so called, a hill hold function) to suppress an unintentional backward movement of the vehicle by holding the brake hydraulic pressure on the vehicle travel on an abrupt slope.

Next, main control contents will be explained below.

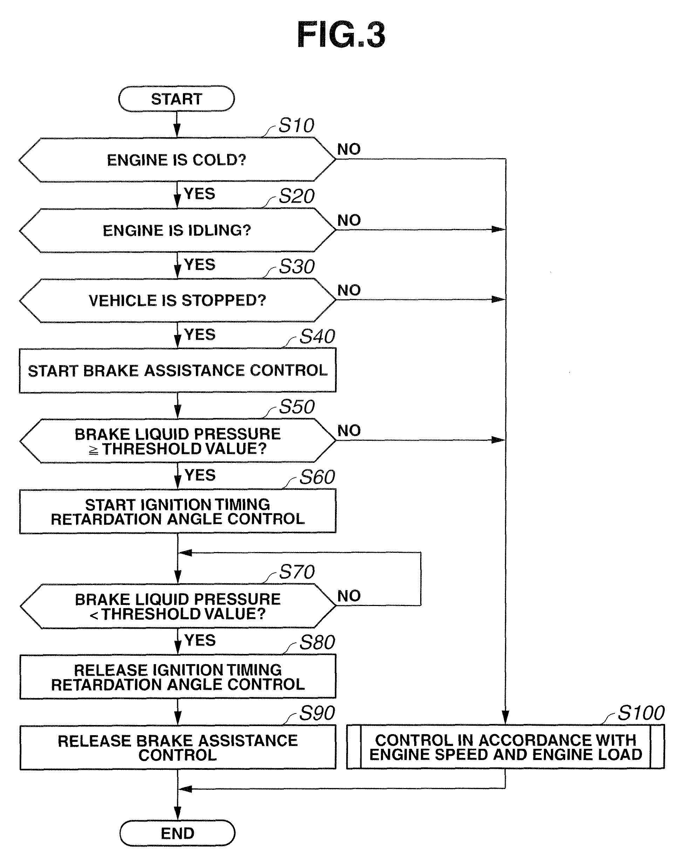

Fig. 3 shows a flowchart representing one example of a main control procedure executed in engine control unit 11 shown in Fig. 1.

The exhaust purification performance is low since, in an idling state immediately after engine EG is cold started, the temperature of exhaust purification catalyst 127 does not reach to an activation temperature. In such a case as described above, the ignition timing of engine EG is preferably retarded with an intake air quantity raised to improve the exhaust performance with an abrupt rise in temperature of exhaust purification catalyst 127. However, the air pressure of collector 115 becomes near to the atmospheric pressure when the opening angle of throttle valve 114 is increased to increase the intake air quantity so that a boosting performance by means of brake booster 21 is reduced. It should be noted that the cold start refers to the start of engine EG in a state in which an engine temperature is the same or cooler than an outside air temperature (during the cold).

A control shown in Fig. 3 is mainly concerned with contents of complementing the brake assistance performance by means of brake booster 21 when the ignition timing of engine EG is retarded, with the opening angle of throttle valve 114 widened at a time of the cold of engine EG, so that this increases the exhaust gas temperature and abruptly increases the temperature of exhaust purification catalyst 127.

At steps S10 through S30, engine control unit 11 determines whether the driving state of the vehicle is during the cold of engine EG, the engine is in the idling state, and the vehicle is stopped.
Specifically, if an engine coolant temperature detected by means of a coolant temperature sensor 133 is lower than a predetermined threshold value, engine control unit 11 determines that engine EG is in the cold state (a step S10). In addition, engine control unit 11 determines whether the engine is in the idling state according to throttle sensor 117 which also serves as the idle switch (a step S20). Then, engine control unit 11 detects a speed sensor not shown, a stroke sensor 28 of brake pedal 2, or set position of shift lever not shown and determines that the vehicle is stopped, for example, when the speed detected by the vehicle speed sensor is determined to zero, when the brake pedal is determined to be depressed according to stroke sensor 28, or when the shift lever is set to a parking position or neutral position (a step S30).

If, at steps S10 through S30, the engine is cold, the engine is in the idling state, and the vehicle is stopped, the routine goes to a step S40. If no at each of all of steps S10 through S30, the routine goes to a step S100. At step S100, an appropriate control in accordance with the engine speed and an engine load is executed.

At a step S40, engine control unit 11 starts the execution of a brake assistance control. The brake assistance control in this embodiment is such that the pressure increase, holding, and pressure decrease of the brake liquid pressure of brake master cylinder 22 according to hydraulic pressure actuator 33 in response to the stroke of brake pedal 2 detected by stroke sensor 28 of brake pedal 2. As the stroke of brake pedal 2 becomes larger, the brake liquid pressure of brake master cylinder 22 is pressure increased. It should be noted that a pressure increase quantity in accordance with the stroke quantity of brake pedal 2 detected by stroke sensor 28 is mapped and stored into engine control unit 11. The above-described control is executed on the basis of the stored map.

At a step S50, the brake pressure is detected by means of hydraulic pressure sensor 27 and engine control unit 11 determines whether the detected brake liquid pressure is equal to or higher than a preset threshold value. If the detected brake liquid pressure is equal to or higher than the preset threshold value, the routine goes to a step S60. On the other hand, if the detected brake liquid pressure is lower than the preset threshold value, the routine goes to a step S100. At step S100, the appropriate control in accordance with the engine speed and engine load is executed. It should be noted that, at this step S50, engine control unit 11 substantially detects whether brake pedal 2 is depressed. If engine control unit 11 determines that the vehicle is traveling in a case where brake pedal 2 is released, the routine goes to step S100 to execute the appropriate control during the traveling.

At a step S60, engine control unit 11 executes a retardation angle control for the ignition timing in order to increase the exhaust purification performance. Specifically, throttle valve 114 is opened and the ignition timing of spark plug 124 is retarded to a vicinity to a top dead center TDC. Thus, the temperature of exhaust gas in exhaust passage 125 is raised to heat exhaust purification catalyst 127. Then, the temperature of exhaust gas has reached to the activation temperature and, thereby, the exhaust purification performance at the time of cold of engine EG can be increased.

At a step S70, engine control unit 11 detects the brake liquid pressure through hydraulic pressure sensor 27 and determines whether the detected brake liquid pressure is lower than the preset threshold value. Or alternatively, engine control unit 11 determines whether brake pedal 2 is released through stroke sensor 28. If the detected brake liquid pressure is determined to be lower than the threshold value or brake pedal 2 is determined to be released, the routine goes to a step S80. However, if brake liquid pressure is equal to or above the threshold value, step S70 is repeated.

At step S80, the present retardation angle control of the ignition timing is released (ended) when, at step S70, engine control unit 11 determines that the brake liquid pressure is below the threshold value or brake pedal 2 is released and, at a step S90, engine control unit 11 releases (ends) the brake assistance control through hydraulic actuator 33.

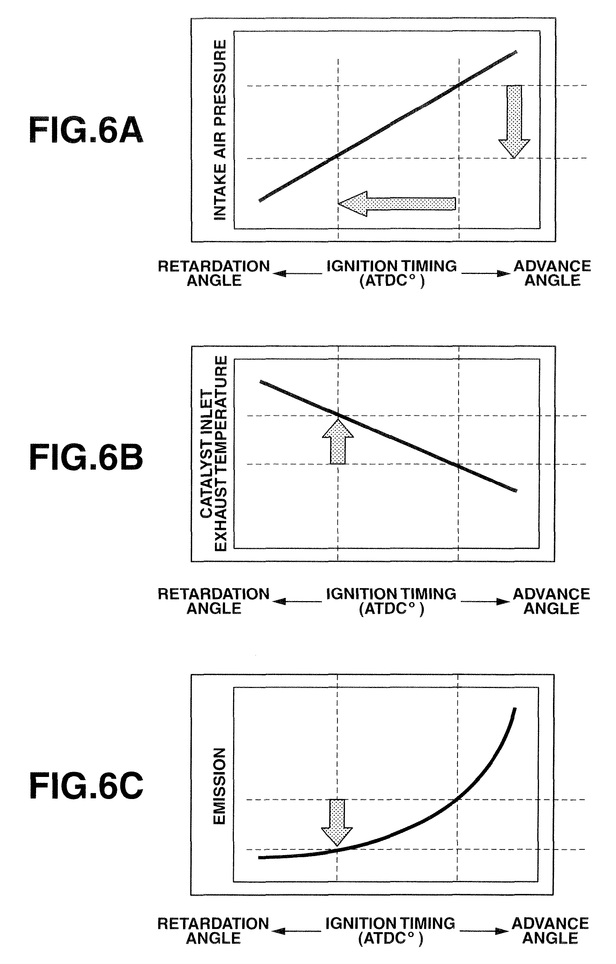

Figs. 6A, 6B, and 6C show situations of the control in this embodiment. Fig. 6A shows a graph representing a relationship of intake air pressure with respect to the ignition timing, Fig. 6B shows a graph representing a relationship of a catalyst inlet temperature with respect to the ignition timing, and Fig. 6C shows a graph representing a relationship of an emission with respect to the ignition timing, respectively. A leftward side of each lateral axis of graphs of Figs. 6A through 6C denotes a retardation angle side.
As described above, since the ignition timing is retarded with throttle valve 114 of engine EG opened (Fig. 6A), the exhaust gas temperature is raised so that the temperature of exhaust purification catalyst 127 is raised (Fig. 6B). Therefore, the exhaust purification performance during the cold of the engine can be increased (Fig. 6C).

In this control, the opening of throttle valve 114 causes the booster negative pressure of brake booster 21 to be reduced and the brake assistance performance through brake booster 21 to be reduced. That is to say, the opening of throttle valve 114 causes a suction pressure of collector 115 to be raised and the rise in the suction pressure of collector 115 causes the rise in the air pressure introduced into negative pressure chamber 213 via negative pressure piping 24 even if brake pedal 2 is depressed as denoted by the dot-dot-and-dash line in Fig. 2. Thus, a difference pressure from the atmospheric pressure introduced into atmospheric pressure chamber 214 via positive pressure piping 25 is small so that an assistance force from diaphragm 212 to pushrod 211 is reduced. In such a case as described above, hydraulic pressure actuator 33 is driven to assist the drive of brake master cylinder 22. Hence, the brake assistance performance can also be maintained.

Next, other preferred embodiments according to the present invention will be described below.

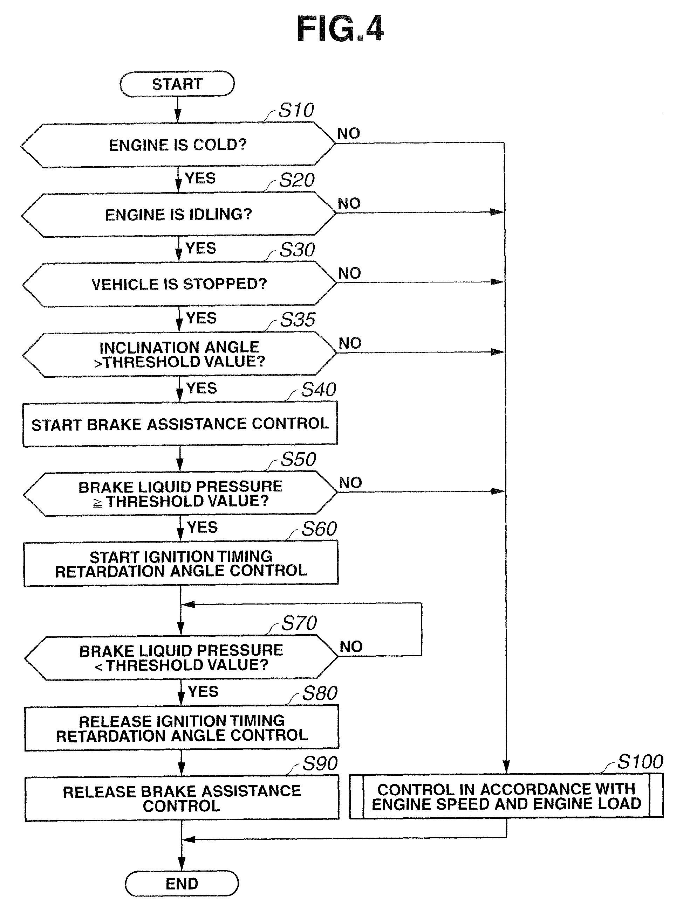

Fig. 4 shows another example of the control procedure executed in engine control unit 11 shown in Fig. 1. In this embodiment, in addition to the structure shown in Fig. 1, an inclination angle sensor (not shown) is added to detect an inclination angle of the vehicle and the detected signal by means of this inclination angle sensor is outputted to engine control unit 11. The other structure is the same as the preferred embodiment described before.

At steps S10 through S30, engine control unit 11 determines whether the driving state of the vehicle is during the cold of engine EG or not, the engine is in the idle state or not, and the vehicle is stopped or not, in the same way as Fig.3.

If, at steps S10 through S30, engine control unit 11 determines that the engine is in the cold state, the engine is idling, and the vehicle is stopped, the routine goes to a step S35. In this embodiment, at step S35, engine control unit 11 determines whether the inclination angle of the vehicle detected by the inclination angle sensor is larger than another preset threshold value. If the inclination angle of the vehicle is larger than the other threshold value, namely, if the vehicle is stopped at a slope or so forth, the routine goes to step S40 to start the brake assistance control. If the inclination angle of the vehicle is equal to or smaller than the other threshold value, the routine goes to step S100 since it is not necessary to perform the brake assistance control through hydraulic pressure actuator 33 but can cope only with the depression force of the vehicle driver.

The control contents of steps S40 through S100 in Fig. 4 are the same as the preferred embodiment shown in Fig. 3. Hence, the explanation thereof will, herein, be omitted.

The brake assistance control may be stopped in a case where it is not necessary to perform the brake assistance control according to the inclination angle of the vehicle.

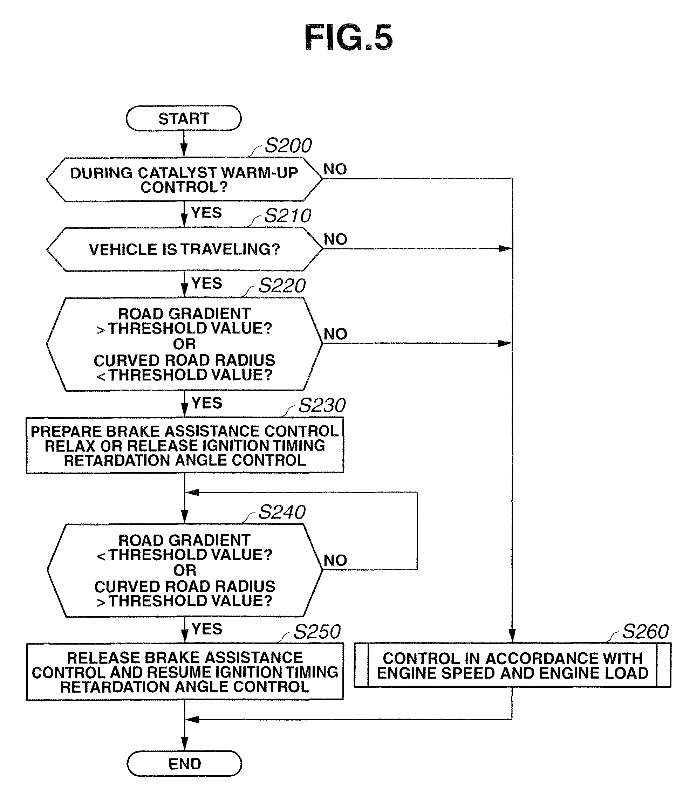

Fig. 5 shows further another example of the control procedure executed in engine control unit 11 shown in Fig. 1. In this example, in addition to the structure shown in Fig. 1, the vehicle is equipped with, for example, a navigation system (not shown) which can search a road map information including a road shape in relation to the vehicle itself. The detected information by means of the navigation system is outputted to engine control unit 11. The other structure of this embodiment is the same as that described in the embodiment described before.

The navigation system in this example includes date on road gradients and curved road radii in the road map information and has a function which can search the road gradient and curved road radius of the road shape on a route of travel on which the vehicle is to be traveled from the present position.

Although, in the two embodiments described above, the ignition timing retardation angle control and the brake assistance control are executed when the engine is in the cold state, the engine is idling, and the vehicle is stopped, the control to be executed when the temperature of exhaust purification catalyst 127 is lower than the activation temperature and when the vehicle is being traveled will be explained below.

At a step S200, engine control unit 11 determines whether engine control unit 11 is executing the catalyst warm-up control through the retardation angle control of the ignition timing or so forth. If the catalyst warm-up control is executing, the routine goes to a step S210.

At step S210, engine control unit 11 reads the output of the speed sensor not shown or of stroke sensor 28 of brake pedal 2 or detects the set position of a shift lever not shown to determine whether the vehicle is traveling. If the vehicle is determined to be traveling, the routine goes to a step S220. At step S220, engine control unit 11 detects the road gradient and curved road radius of a route on which the vehicle is to travel from the present position through the navigation system and determines whether the detected road gradient is larger than a preset threshold value of the road gradient or the detected curved road radius is smaller than a preset threshold value of the curved road radius.

If, at step S220, engine control unit 11 determines that the road gradient is larger than the threshold value of the road gradient (the vehicle is traveling on an abrupt slope) or that the radius of the curved road is smaller than the threshold value of the radius (the vehicle is traveling on an abrupt curved road), the routine goes to a step S230 since a necessity of the brake assistance becomes high.

It should be noted that, if the catalyst warm-up control is not executed since the temperature of exhaust purification catalyst 127 has reached to the activation temperature, at step S200, if the vehicle is not traveling at step S210, or if the road gradient, at step S220, is equal to or smaller than the threshold value of the road gradient (the vehicle is traveling on a flat road or a moderate slope) or the radius of the curved road is equal to or larger than the threshold value of the curved road radius (the vehicle is traveling on a straight road or a moderate curved road), the routine goes to a step S260. At step S260, the appropriate control in accordance with the engine speed and the engine load is executed.

At step S230, engine control unit 11 outputs a command signal to ABS control unit ABS to prepare the brake assistance control through the hydraulic pressure actuator and waits until the vehicle reaches to the road having the road gradient larger than the threshold value or reaches to the road having the radius of the curved road smaller than the threshold value thereof. At the same time, the ignition timing control retardation angle control determined at step S200 is relieved or released. Since throttle valve 114 is relatively closed due to the relaxation or release of the ignition timing retardation angle control, the negative pressure of collector 115 is secured so that the brake assistance performance through brake booster 21 is increased.

At a step S240, engine control unit 11 again detects another of gradients of roads and another of the radii of the curved roads on which the vehicle is to travel from the present position and determines whether the detected road gradient is smaller than the preset threshold value of the road gradient or the radius of curved road is larger than the preset threshold value of the radius of curved road. This determination is repeated until the road gradient becomes smaller than the threshold value of the road gradient or the curved road radius becomes larger than the threshold value of the curved road radius.

If, at step S240, the road gradient is smaller than the threshold value of the road gradient or the radius of the curved road is larger than the threshold value of the radius of curved road, the routine goes to a step S250 since a necessity of the brake assistance control becomes low. At step S250, engine control unit 11 releases the brake assistance control executed at step S230 and resumes the ignition timing retardation angle control.

As described above, since the state of the traveling route causes the high necessity of the brake assistance during the warm-up control of exhaust purification catalyst 127 even during the traveling of the vehicle, the brake assistance control using hydraulic pressure actuator 33 is executed. Thus, a compatibility between the improvement in emission performance and maintenance of the brake assistance performance can be achieved.

It should be noted that, in the above-described embodiments, hydraulic pressure actuator 33 of anti-lock brake system ABS is commonly used for the brake assistance control. However, another hydraulic pressure actuator of an onboard equipment such as a vehicle dynamics control system (an electronic stability control system) may commonly be used. In addition, an exclusive-use hydraulic pressure actuator may be disposed.

Furthermore, such a control procedure that the routine shown in Fig. 5 is directly incorporated into the subroutine of step S100 of Fig. 3 or step S100 of Fig. 5 can be provided.

The above-described hydraulic pressure sensor 27 corresponds to pressure detecting means according to the present invention, coolant temperature sensor 133 and speed sensor not shown correspond to driving state detecting means according to the present invention, engine control unit 11 corresponds to control means according to the present invention, the vehicular inclination angle sensor not shown corresponds to angle detecting means according to the present invention, engine control unit 11 corresponds to catalyst warm-up detecting means according to the present invention, and the navigation system not shown corresponds to road map searching means according to the present invention.

### Explanation of signs

- EG: engine (internal combustion engine)
- 11: engine control unit
- 111, 111a: intake air passage
- 112: air filter
- 113: pressure sensor
- 114: throttle valve
- 115: collector
- 116: throttle valve actuator
- 117: throttle sensor
- 118: fuel injection valve
- 119: cylinder
- 120: piston
- 121: intake valve
- 122: exhaust valve
- 123: combustion chamber
- 124: spark plug
- 125: exhaust passage
- 126: air-fuel ratio sensor
- 127: exhaust purification catalyst
- 128: temperature sensor
- 129: crankshaft
- 130: crankshaft
- 131: crank angle sensor
- 132: cooling jacket
- 133: coolant temperature sensor
- 2: brake pedal
- 21: brake booster
- 22: brake master cylinder
- 23: reservoir tank
- 24: negative pressure piping
- 25: positive pressure piping
- 26: check valve
- 27: hydraulic pressure sensor
- 28: stroke sensor
- 3: road wheel
- 31: revolution sensor
- 32: ABS control unit
- 33: hydraulic pressure actuator
- 34: hydraulic pressure piping

## Claims

1. A control apparatus for a vehicle, comprising:
an internal combustion engine;
a brake booster using an intake negative pressure of the internal combustion engine;
a brake master cylinder connected to a fluid pressure actuator mounted in the vehicle;
pressure detecting means for detecting a fluid pressure of the brake master cylinder;
driving state detecting means for detecting a driving state of the internal combustion engine; and
control means for retarding an ignition timing with a throttle valve of the internal combustion engine opened, in a case where the driving state detected by the driving state detecting means is an idle driving state during a cold of the internal combustion engine, and for driving the fluid pressure actuator to assist the brake master cylinder, in a case where the fluid pressure detected by the pressure detecting means is equal to or larger than a predetermined value during the idle driving state and the cold of the engine.

2. The control apparatus for the vehicle as claimed in claim 1, wherein the fluid pressure actuator is the fluid pressure actuator included in an anti-lock brake system of the vehicle or a vehicle dynamics control system thereof.

3. The control apparatus for the vehicle as claimed in either claim 1 or 2, wherein the control apparatus further comprises angle detecting means for detecting an inclination angle of the vehicle and the control means retards the ignition timing with the throttle valve of the internal combustion engine opened and drives the fluid pressure actuator to assist the brake master cylinder only if the driving state is the idle driving state during the cold of the internal combustion engine, the fluid pressure is equal to or larger than the predetermined value, and the inclination angle of the vehicle detected by the angle detecting means is larger than a predetermined angle.

4. The control apparatus for the vehicle as claimed in any one of the preceding claims 1 through 3, wherein the control apparatus further comprises: warm-up control detecting means for detecting a catalyst warm-up control in which the ignition timing is retarded with the throttle valve of the internal combustion engine opened; and road map searching means for searching a road map information including a road shape in relation to the vehicle and the control means relaxes or releases the catalyst warm-up control and drives the fluid pressure actuator to assist the brake master cylinder, in a case where the driving state is the vehicle traveling, the catalyst warm-up control is executed, and the inclination angle of the traveling road searched by the road map searching means is larger than the predetermined angle, and/or a radius of a curved road is smaller than another predetermined value.

5. A control method for a vehicle, the vehicle comprising: an internal combustion engine;
a brake booster using an intake negative pressure of the internal combustion engine; and
a brake master cylinder connected to a fluid pressure actuator mounted in the vehicle, the control method comprising:
detecting a fluid pressure of the brake master cylinder;
detecting a driving state of the internal combustion engine; and
retarding an ignition timing with a throttle valve of the internal combustion engine opened, in a case where the detected driving state is an idle driving state during a cold of the internal combustion engine and driving the fluid pressure actuator to assist the brake master cylinder, in a case where the detected fluid pressure is equal to or larger than a predetermined value during the idle driving state and the cold of the engine.

6. The control method for the vehicle as claimed in claim 5, wherein the fluid pressure actuator is the fluid pressure actuator included in an anti-lock brake actuator of the vehicle or in a vehicle dynamics control system thereof.

7. The control method for the vehicle as claimed in either claim 5 or 6, wherein the control method further comprises detecting an inclination angle of the vehicle and the ignition timing is retarded with the throttle valve of the internal combustion engine opened and the fluid pressure actuator to assist the brake master cylinder is driven only if the driving state is the idle driving state during the cold of the internal combustion engine, the fluid pressure is equal to or larger than the predetermined value, and the detected inclination angle of the vehicle is larger than a predetermined angle.

8. The control method for the vehicle as claimed in any one of the preceding claims 5 through 7, wherein the control method further comprises: detecting a catalyst warm-up control in which the ignition timing is retarded with the throttle valve of the internal combustion engine opened; and searching a road map information including a road shape in relation to the vehicle, and, in the control method, retarding an ignition timing with a throttle valve of the internal combustion engine opened, in a case where the detected driving state is an idle driving state during a cold of the internal combustion engine and driving the fluid pressure actuator to assist the brake master cylinder, in a case where the detected fluid pressure means is equal to or larger than a predetermined value during the idle driving state and the cold of the engine the catalyst warm-up control is relaxed or released and the fluid pressure actuator is driven to assist the brake master cylinder in a case where the driving state is the vehicle traveling, the catalyst warm-up control is executed, and an inclination angle of the searched traveling road is larger than the predetermined angle, and/or a radius of a curved road is smaller than another predetermined value.
